# EUROPEAN PATENT APPLICATION

(11) **EP 3 176 403 A1**
(43) Date of publication of application: **07.06.2017**
(21) Application number: 15197641.2
(22) Date of filing: 02.12.2015
(51) Int. Cl.: F02B 23/06

(54) **PISTON FOR A GASEOUS FUEL INTERNAL COMBUSTION ENGINE**

(71) Applicant: Caterpillar Energy Solutions GmbH, 68167 Mannheim (DE)
(72) Inventor: OHLER, Sebastian, Dr., 67069 Ludwigshafen (DE); SCHELLE, Jörg, 74395 Mundelsheim (DE)
(74) Representative: Kramer Barske Schmidtchen Patentanwälte PartG mbB

(57) **Abstract**

The present disclosure relates to a piston (10) for a gaseous fuel internal combustion engine. The piston (10) comprises a piston bowl (16) including a bowl side face (24) extending circumferentially about a central axis (A) and being connected to a piston top face (14). The piston bowl side face (24) includes a plurality of recesses (26) and protrusions (28) arranged alternately to each other in a circumferential direction about the central axis (A). The recesses (26) include a helical recess section (30) that helically extends about the central axis (A). The piston configuration may increase the turbulence in the piston bowl (16) during operation.

## Description

### Technical Field

The present disclosure relates to a piston for a gaseous fuel internal combustion engine, and a method for operating an internal combustion engine, particularly a gaseous fuel internal combustion engine.

### Background

In gaseous fuel internal combustion engines with positive or induced ignition, pistons with piston bowls may be used. Those piston bowls may have different piston bowl shapes. In general, the following common variants are used.
A) Pistons with a roof-shaped piston crown or head. The piston crown is configured for combustion processes with a gas-scavenged pre-chamber so that the flare jets strike the combustion chamber walls as late as possible.
B) Pistons with a tub-shaped piston crown. The piston crown is configured to retain a tumble flow generated by inflow from the inlet channels.
C) Pistons with an omega-shaped piston bowl. The piston crown is configured for optimal direct injection for diesel operation. It is also employed with gaseous fuel internal combustion engines with positive ignition (gaseous fuel Otto engines) for cost reasons and for the sake of simplicity, however, despite a possibly poor combustion profile.
D) Pistons with a pot-shaped piston bowl having a substantially straight circumferential bowl side face. The piston crown is configured to generate a squish flow in a radial direction between a piston top head face or rim and a bottom face of a cylinder head. Furthermore, a swirl flow in the pot-shaped piston bowl is intensified.

US 2015/0107559 A1 discloses an example of a piston with a pot-shaped piston bowl.

For gaseous fuel Otto engines with chamber plugs and cylinder head inlet channels creating a swirl flow, pistons with pot-shaped piston bowls are highly suitable. During the compression stroke, the mixture above the piston top head face (squish face) of the piston is displaced into the pot-shaped piston bowl. During the expansion stroke, the mixture is sucked out of the pot-shaped piston bowl. This process, in particular in the vicinity of the top dead center, may lead to intense squish flows. The squish flows increase the turbulences in the combustion chamber and accelerate the combustion. The high turbulence in the middle of the combustion chamber results in a short combustion duration.

Complementarily to the squish flow, the pot-shaped piston bowl may also lead to an acceleration of the swirl flow generated by the geometry of cylinder head inlet channels. Due to the rotary impulse retention, the rotational velocity of the swirl flow increases when the mixture is displaced into the pot-shaped piston bowls. The swirl flow may be used to keep up the turbulences during the combustion.

High turbulences in the pot-shaped piston bowl may allow to compensate a decrease in the laminar speed of combustion if operating gaseous fuel engines with lean fuel air mixtures, as common in large-bore engines. Particularly, the decrease in combustion may be compensated by a high turbulent speed of combustion by the creation of turbulences in the combustion chamber. The created turbulences result in an increased reaction area and, therefore, to an increase of the speed of transformation during combustion.

The present disclosure is directed, at least in part, to improving or overcoming one or more aspects of prior systems.

### Summary of the Disclosure

In one aspect, the present disclosure relates to a piston for a gaseous fuel internal combustion engine. The piston may comprise a piston skirt extending circumferentially about a piston central axis. The piston may comprise a piston top face extending in a plane perpendicular to the central axis. The piston may comprise a piston bowl including a bowl side face extending circumferentially about the central axis and being connected to the piston top face. The piston bowl side face may include a plurality of recesses and protrusions arranged alternately to each other in a circumferential direction about the central axis. The protrusions may extend in a direction to the central axis. The recesses may include a helical recess section that may helically extend about the central axis.

In another aspect, the present disclosure relates to a method for operating an internal combustion engine, particularly a gaseous fuel internal combustion engine, with a piston. The method may comprise supplying a mixture of fuel and air via at least one inlet channel into a combustion chamber in a swirling motion about a central axis of the combustion chamber. The method may comprise guiding the swirling mixture of fuel and air into a piston bowl of the piston via a plurality of helical recess sections provided in a circumferential bowl side face of the piston bowl. The helical recess sections may helically extend about the central axis.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a plan view of an exemplary piston according to the present disclosure;
Fig. 2 shows a cut view of the exemplary piston according to the present disclosure for showing the configuration of the piston bowl;
Fig. 3 shows a plan view of the exemplary piston according to the present disclosure for indicating some of the relevant dimensions of the exemplary piston; and
Fig. 4 shows a greatly simplified view of a piston bowl side face of the exemplary piston according to the present disclosure, wherein the piston bowl side face is unwound in a plane for indicating some further relevant dimensions of the exemplary piston.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that based on a pot-shaped piston bowl, an increase in turbulences particularly in a center region of the piston bowl may be achieved if adapting the inflow portions of the piston into the piston bowl. Specifically, the desirable increase in turbulences can be achieved if providing helical recess sections in the circumferential bowl side face that influence inflowing flows to maintain or induce a swirling motion when entering the piston bowl.

More specifically, a mixture of fuel and air is supplied in a swirling motion into the combustion chamber via inlet channels. Furthermore, squish flows directed in direction to the central axis are generated if moving the piston towards TDC. The squish flows are transformed into turbulences at a transition between the piston bowl and the surrounding piston top face due to the influence of the transition edge functioning as a stall edge. Those turbulences within the piston bowl can be effectively maintained and even increased if directing the above-noted swirling mixture of fuel an air from the inlet channels into the piston bowl via helically recesses to maintain, redirect or invert the swirling motion. It was found that the swirling inflow is particularly suitable to maintain or even increase the turbulences within the piston bowl, particularly in a center region of the piston bowl.

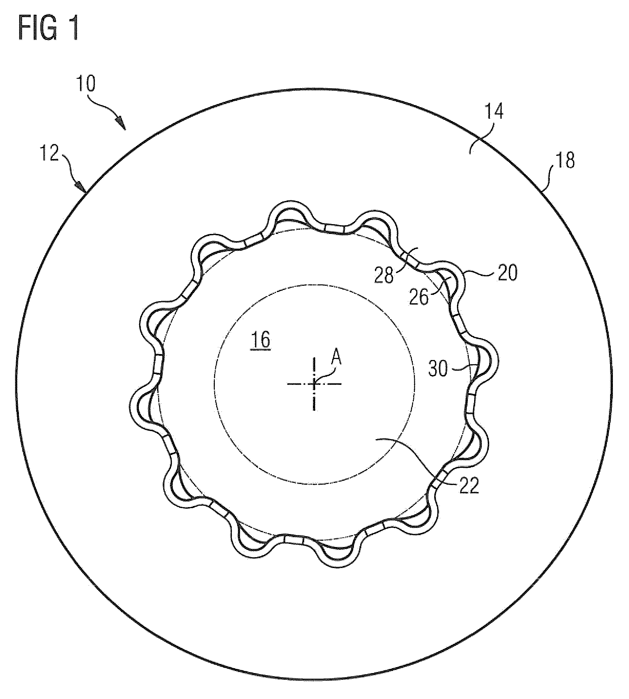

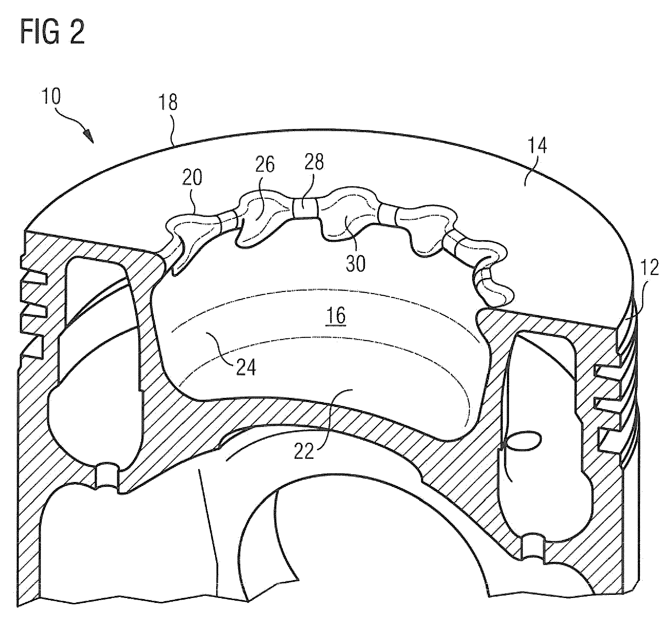

In Figs. 1 and 2, an exemplary piston 10 according to the present disclosure is shown in a plan view.

The piston 10 may be one of a plurality of pistons used in a gaseous fuel internal combustion engine, and may be reciprocatingly arranged in a respective cylinder to travel between a top dead center (TDC) and a bottom dead center (BDC) during operation of the engine.

For the purposes of the present disclosure, the internal combustion engine is considered as a four-stroke large-bore stationary or marine gaseous fuel internal combustion engine, in which the piston 10 as disclosed herein is particularly applicable as will be apparent from the following description. A large-bore engine is an engine having a cylinder bore diameter greater than 130 mm. However, one skilled in the art will recognize that the piston 10 as disclosed herein may be also usable in other internal combustion engines. Hence, the internal combustion engine may be of any type (gas, diesel, natural gas, propane, two-stroke, etc.), any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The piston 10 includes a piston skirt 12, a piston top face or rim 14, and a piston bowl 16.

The piston skirt 12 extends circumferentially about a piston central axis A (see Fig. 1). In an assembled state, the piston skirt 12 of the piston 10 faces an inner cylindrical face of a cylinder liner or cylinder (not shown).

The piston top face 14 extends in a plane perpendicular to the central axis A and delimits the piston 10 at its top end. If assembled, the piston top face 14 faces a bottom face of a cylinder head (not shown) covering the respective cylinder associated with the piston 10.

In the shown embodiment, the piston top face 14 is configured as a flat and substantially annular ring face. The substantially annular ring is delimited by a circular outer boundary or edge 18 that connects to the piston skirt 12, and a wavy circumferential inner boundary or edge 20 that connects to the piston bowl 16. As is described in greater detail later on, the edge 20 serves as a stall edge for the squish flows to generate turbulences within the piston bowl 16. Additionally, in some embodiments, the piston top face 14 may include one or more valve pockets to provide space for bottom portions of opened valves, for example poppet valves, if the piston 10 is at TDC.

The piston bowl 16 is provided in a top center region of the piston 10 and comprises a bowl bottom face 22 and a bowl side face 24. The bowl bottom face 22 is substantially disc-shaped, and positioned perpendicular and centered with respect to the central axis A.

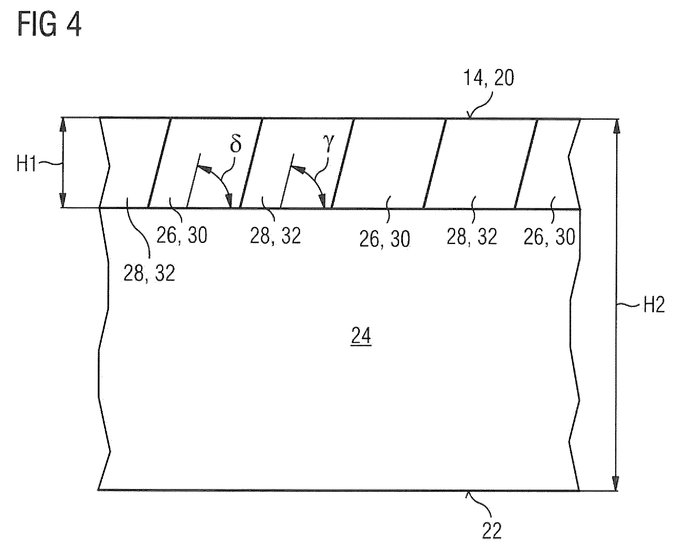

The piston bowl 16 is substantially configured as a pot-shaped piston bowl with a substantially flat bottom face 22 as compared to an omega-shaped piston bowl having a bowl bottom face with a center apex. In this context, "substantially flat" or "substantially disc shaped" means that the bottom face 22 may still include a small increase in height, for example towards the center, however, having a maximum height of less than about 25 % of an entire height H2 (see Fig. 4) of the piston bowl side face 24. In contrast, the center apex of the omega-shaped piston bowl typically has a height of at least 50 % of a height of the respective piston bowl side face.

At a circumferential outer edge of the bowl bottom face 22, the same transitions smoothly into the bowl side face 24. Said bowl side face 24 extends circumferentially about the central axis A and interconnects the piston top face 14 and the bowl bottom face 22.

In the shown embodiment, a plurality of recesses 26 and protrusions 28 are arranged alternately to each other in a circumferential direction about the central axis A in a top region of the bowl side face 24. The piston 10 as shown includes in total twelve recesses 26 and twelve protrusions 28. Other embodiments may include any number of recesses and protrusions, for example within a range between five and twenty-four recesses and protrusions, respectively.

The recesses 26 and the protrusions 28 are symmetrically arranged in a circumferential direction about the central axis A. The recesses 26 extend in a direction away from the central axis A. The protrusions 28 extend in a direction to the central axis A, particularly in a radial direction to the central axis A.

The recesses 26 are formed convex with respect to the central axis A. In the shown embodiment, the recesses 26 are formed curved about the central axis A. Specifically, the recesses 26 have a circular arc segment cross-section in a plane perpendicular to the central axis A. For example, the recesses 26 may include a half circle cross-section in a plane perpendicular to the central axis A, or a cross-section with a shorter circular arc segment.

The protrusions 28 are formed concave with respect to the central axis A. In the shown embodiment, the protrusions 28 have a trapezoid cross-section with rounded edges in a plane perpendicular to the central axis A.

It is contemplated that the recesses 26 and the protrusions 28 may include other cross-sections in a plane perpendicular to the central axis A, for example semi-elliptical, triangular, rectangular etc.

In some embodiments, the recesses 26 and/or the protrusions 28 may be provided along an entire height H2 (see Fig. 4) of the bowl side face 24, whereas in other embodiments, the recesses 26 and/or the protrusions 28 may be provided only in part along the height H2 (see Fig. 4) of the bowl side face 24.

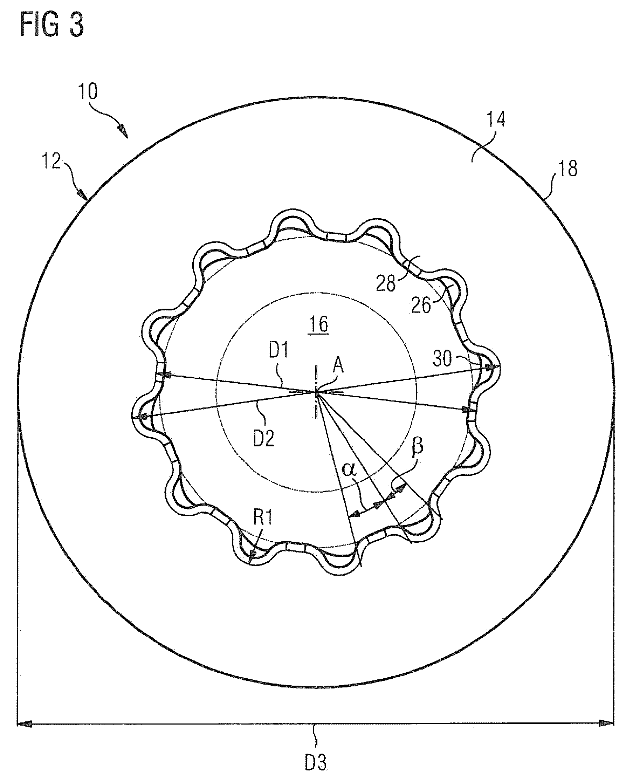

Turning to Fig. 3 for describing some relevant dimensions of the recesses 26 and the protrusions 28.

As indicated in Fig. 3, the piston bowl 16 has a first or inner bowl diameter D1 limited by a plurality of radial innermost points of the protrusions 28 with respect to the central axis A. Additionally, the piston bowl 16 has a second or outer bowl diameter D2 limited by a plurality of radial outermost points of the recesses 26 with respect to the central axis A. Further, the piston 10 (the outer edge 18 of the piston 10) has a piston outer diameter D3.

In some embodiments, the piston 10 may be configured such that a ratio between the first bowl diameter D1 and the second bowl diameter D2 may be within a range between 0,6 and 0,9, for example about 0,75. Additionally or alternatively, the piston 10 may be configured such that a ratio between the first bowl diameter D1 and the piston outer diameter D3 may be within a range between 0,35 and 0,55, for example about 0,45.

As an example, the first bowl diameter D1 may be 90 mm, the second bowl diameter D2 may be 106 mm, and the piston outer diameter D3 may be 190 mm.

Furthermore, in the shown embodiment, the recesses 26 with a circular arc segment cross-section have a radius R1. In some embodiments, the recesses 26 may be configured such that a ratio between the radius R1 and the first bowl diameter D1 is within a range between 0,03 (in embodiments with a high number of short recesses, for example twenty-four recesses 26) and 0,3 (in embodiments with a small number of lengthy recesses, for example five recesses 26).

In exemplary embodiments, in which the piston outer diameter D3 is 190 mm and the first bowl diameter D1 is 90 mm, the radius R1 of the recesses 26 may be about 23 mm in embodiments with in total five recesses 26, about 7,5 mm in embodiments with in total twelve recesses 26 (as depicted in Figs. 1 to 3), and about 4 mm in embodiments with in total twenty-four recesses 26.

Furthermore, a protrusion width angle α confined between two opposite outer ends of one protrusion 28 with respect to the central axis A and in a plane perpendicular to the central axis A may be within a range between 10° and 20°, particularly 15°.

Still further, a recess width angle β confined between two opposite outer ends of one recess 26 with respect to the central axis A and in a plane perpendicular to the central axis A may be within a range between 7,5° and 50° depending on the number of the recesses 26.

Referring back to Figs. 1 and 2, it can be seen that the recesses 26 include a helical recess section 30 that helically extends about the central axis A. In other words, the helical recess sections 30 (and helical protrusion sections 32) extend in both the circumferential direction about the central axis A and a direction towards the bowl bottom face 22 (parallel to the central axis A).

In the shown embodiment, the recesses 26 are entirely constituted by the helical recess sections 30. In other embodiments, the helical recess sections 30 may only form a portion of the recesses 26, particularly a top portion of the recesses 26 arranged adjacent to the piston top face 14.

Similar to the recesses 26 and the helical recess sections 30, the protrusions 28 may include helical protrusion sections 32, particularly depending on a height of the protrusions 28 and the configuration of the helical recess sections 30 as can be best seen in the schematic drawing of Fig. 4.

Fig. 4 shows a greatly simplified drawing of the exemplary embodiment of a section of the piston bowl side face 24 of the piston 10 as depicted in Figs. 1 to 3, wherein the piston bowl side face 24 is unwound in a plane.

In the shown embodiment, the helical recess sections 30 and the helical protrusion sections 32 are formed as left-handed helical sections. Alternatively, the helical recess sections 30 and the helical protrusion sections 32 may be formed as a right-handed helical sections, or as combinations of left-handed and right-handed helical sections.

Furthermore, a height H1 of the helical recess sections 30 corresponds to a height of the helical protrusion section 32. In some embodiments, the height H1 of the helical recess sections 30 and the height of the helical protrusion sections 32 may be unequal, for example in embodiments in which the protrusions 28 are provided in a top region of the bowl side face 24 adjacent to the piston top face 14 only, and the recesses 26 including the helical recess sections 30 are provided in a greater region of the bowl side face 24.

In some embodiments, the height H1 of the helical recess sections 30 may correspond to a height H2 of the piston bowl side face 24. Alternatively, the height H1 of the helical recess sections 30 may be smaller than the height H2 of the piston bowl side face 24. For example, the helical recess sections 30 may extend in a top region of the piston bowl side face 24 only, such as in the upper half, upper third or upper quarter of the piston bowl side face 24 with respect to the central axis A.

A pitch angle γ of the helical recess sections 30 is smaller than 90°, for example within a range from 5° to 90°. In the shown embodiment, the pitch angle γ of the helical recess sections 30 is about 75°. The pitch angle γ of the helical recess sections 30 may be equal to a pitch angle δ of the helical protrusion sections 32.

As used herein and shown in Fig. 4, the pitch angle γ is measured between a circumferential direction about the central axis A and a helical extension direction of the helical recess sections 30, wherein the circumferential direction and the helical extension direction are unwound in a plane.

### Industrial Applicability

The piston 10 as exemplary disclosed herein is particularly applicable in gaseous fuel internal combustion engines as is described in more detail hereinbelow. It is contemplated, however, that the piston 10 may be used in other internal combustion engines, for example diesel or petrol internal combustion engines.

In operation of the gaseous fuel internal combustion engine equipped with the piston 10, the piston 10 travels to a top dead center (TDC) position. Thereby, a squish flow is generated in a region above the piston top face 14 of the piston 10. The squish flow(s) is/are directed towards the central axis A. As the squish flows pass the wavy inner edge 20 of the piston top face 14, turbulences within the piston bowl 16 are generated, because the wavy inner edge functions as a stall edge.

Furthermore, during an intake stroke, a mixture of gaseous fuel and air is supplied via at least one (swirl generating) inlet channel into a combustion chamber in a swirling motion about the central axis A of the piston 10. As used herein, the combustion chamber is delimited by a cylinder head, a circumferential cylinder face, and a top end of the piston 10.

During the intake and the compression strokes, the swirling mixture of fuel and air from the inlet channels are guided into the piston bowl 16 via the plurality of helical recess sections 30 while maintaining, adapting or inverting the swirling motion. The swirl flow may maintain its swirl direction if the inflow direction from the inlet channels corresponds to the helical direction of the helical recess sections 30, for example if the inflow direction and the helical direction of the helical recess sections 30 are both left-handed. On the other hand, the swirl flow may invert its swirl direction if passing the helical recess sections 30 in a case in which the inflow direction originating from the inlet channels is directed opposite to the helical direction of the helical recess sections 30, for example if the inflow direction is left-handed and the helical direction is right-handed. As a result, the swirl flow is intensified and strengthened by the helical recess sections 30.

It was found that the helical recess sections 30 as described herein are particularly suitable for maintaining the turbulences already present in the piston bowl 16 due to the squish flows at least to some extent, and may even increase the same. Accordingly, a highly turbulent region in the center of the combustion chamber (within the piston bowl 16) for the combustion of the mixture of fuel and air is generated, which improves combustion as one skilled in the art will appreciate.

Furthermore, for preventing the generation of peak temperature spots and smoothening the flows along the faces of the piston 10, the various portions of the piston 10 smoothly transition into respective adjacent portions via predefined fillets as can be seen in Figs. 1 to 3.

Terms such as "about", "around", "approximately", or "substantially" as used herein when referring to a measurable value such as a parameter, an amount, a temporal duration, and the like, is meant to encompass variations of +/-10% or less, preferably +1-5% or less, more preferably +1/-1% or less, and still more preferably +1/-0.1 % or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A piston (10) for a gaseous fuel internal combustion engine, comprising:
a piston skirt (12) extending circumferentially about a piston central axis (A);
a piston top face (14) extending in a plane perpendicular to the central axis (A); and
a piston bowl (16) including a bowl side face (24) extending circumferentially about the central axis (A) and being connected to the piston top face (14), wherein the piston bowl side face (24) includes a plurality of recesses (26) and protrusions (28) arranged alternately to each other in a circumferential direction about the central axis (A), the protrusions (28) extending in a direction to the central axis (A), and the recesses (26) including a helical recess section (30) that helically extends about the central axis (A).

2. The piston (10) of claim 1, wherein the protrusions (28) include a helical protrusion section (32) that helically extends about the central axis (A).

3. The piston (10) of claim 1 or 2, wherein the helical recess sections (30) have a pitch angle (γ) smaller than 90°, for example about 75°.

4. The piston (10) of any one of claims 1 to 3, wherein the helical recess sections (30) are formed as right-handed helical sections, as left-handed helical sections, or as combinations thereof.

5. The piston (10) of any one of the preceding claims, wherein:
the helical recess sections (30) extend along an entire height (H2) of the bowl side face (24); or
the helical recess sections (30) extend in a top region of the bowl side face (24) only, for example in the upper half, upper third, or upper quarter of the piston bowl side face (24) with respect to the central axis (A).

6. The piston (10) of any one of the preceding claims, wherein:
the recesses (26) are provided along an entire height (H2) of the bowl side face (24); and/or
the protrusions (28) are provided along an entire height (H2) of the bowl side face (24).

7. The piston (10) of any one of the preceding claims, wherein the piston bowl (16) has a first bowl diameter (D1) limited by radial innermost points of the protrusions (28) and a second bowl diameter (D2) limited by radial outermost points of the recesses (26), and a ratio between the first bowl diameter (D1) and the second bowl diameter (D2) is within a range between 0,6 and 0,9, for example about 0,75.

8. The piston (10) of any one of the preceding claims, wherein the piston bowl (16) has a first bowl diameter (D1) limited by radial innermost points of the protrusions (28) and the piston (10) has a piston outer diameter (D3), and a ratio between the first bowl diameter (D1) and the piston outer diameter (D3) is within a range between 0,35 and 0,55, for example about 0,45.

9. The piston (10) of any one of the preceding claims, wherein the recesses (26) are formed curved with respect to the central axis, particularly with a circular arc segment cross-section in a plane perpendicular to the central axis (A).

10. The piston (10) of any one of the preceding claims, wherein in total between five and twenty-four recesses (26) are provided.

11. The piston (10) of any one of the preceding claims, wherein:
the piston bowl (16) comprises a bowl bottom face (22) being substantially disc-shaped; and/or
the piston bowl (16) is configured as a pot-shaped piston bowl.

12. The piston (10) of any one of the preceding claims, wherein each protrusion (28) extends between two outer protrusions ends in a plane perpendicular to the central axis (A), and a protrusion width angle (α) is confined between the two outer protrusions ends with respect to the central axis (A), the protrusion width angle (α) being within a range between 10° and 20°.

13. A method for operating an internal combustion engine, particularly a gaseous fuel internal combustion engine, with a piston (10), comprising:
supplying a mixture of fuel and air via at least one inlet channel into a combustion chamber in a swirling motion about a central axis (A) of the combustion chamber;
guiding the swirling mixture of fuel and air into a piston bowl (16) of the piston (10) via a plurality of helical recess sections (30) provided in a circumferential bowl side face (24) of the piston bowl (16), the helical recess sections (30) helically extending about the central axis (A).

14. The method of claim 13, further comprising:
moving the piston (10) to a top dead center position and, thereby, generating a squish flow in a region above a piston top face (14) of the piston (10), the squish flow being directed towards the central axis (A);
generating turbulences within the piston bowl (16) at a stall edge (20) of the piston top face (14) as the squish flow passes the stall edge (20), the stall edge (20) connecting the piston bowl (16) and the piston top face (14); and
maintaining the turbulences within the piston bowl (16) by guiding the swirling mixture of fuel and air into the piston bowl (16) via the plurality of helical recess sections (30).

15. The method of claim 13 or 14, further comprising:
providing a piston (10) according to any one of claims 1 to 12.
